# EUROPEAN PATENT APPLICATION

(11) **EP 4 085 761 A1**
(43) Date of publication of application: **09.11.2022**
(21) Application number: 21193082.1
(22) Date of filing: 25.08.2021
(51) Int. Cl.: A01K 15/00

(54) **CAT TEASER**

(30) Priority: 07.05.2021 CN 202110492776; 07.05.2021 CN 202121003019 U
(71) Applicant: Shenzhen DogCare Innovation & Technology Co., Ltd., Shenzhen, Guangdong 518000 (CN)
(72) Inventor: WANG, Sihua, Shenzhen, 518000 (CN); FAN, Yahua, Shenzhen, 518000 (CN); LIU, Xiaona, Shenzhen, 518000 (CN); YANG, Jianfu, Shenzhen, 518000 (CN)
(74) Representative: Petculescu, Ana-Maria

(57) **Abstract**

The present disclosure relates to a cat teaser, and belongs to the field of pet products. The cat teaser includes a base, a power supply, a main body shell, a laser emitting module, a fixed frame, a main control circuit board and a main body motor; the laser emitting module is provided on the top of the main body shell, and includes a laser emitter and an auxiliary motor that swings up and down; the fixed frame and the main control circuit board are fixed in the main body shell; the main body motor and a conductive disc are respectively fixed on upper and lower sides of the fixed frame; a shaft of the main body motor passes through the conductive disc and is fixed on the top of the base; pogo pins of the power supply are installed on the top of the base and are in contact with the conductive disc; the main control circuit board controls the main body motor, the auxiliary motor and the laser emitting module and is electrically connected to the conductive disc; the power supply supplies power to the main body motor and the laser emitting module through the conductive disc and the main control circuit board. The present disclosure expands a moving range of the laser spot and avoids the risk of wire tangling. In addition, through the main body motor, the present disclosure can drive the main body shell to rotate 360° on any trajectory under active control, and can control the trajectory of the laser spot according to the movement trajectory of the animal.

## Description

### TECHNICAL FIELD

The present disclosure relates to the technical field of pet products, in particular to a cat teaser.

### BACKGROUND

Cats are surprisingly sensitive to lasers, and thus like to chase lasers for fun. People usually tease their cats with laser pointers. In this case, however, people need to hold the laser pointers with their hands while waving them continuously, which is not suitable for those who do not have enough time to entertain their pets. As a result, automatic laser cat teasers that are capable of being fixed or placed in rooms have emerged on the market. The laser spot emitted by such laser cat teasers, however, has a limited moving range, which is not very interesting to cats.

### SUMMARY

### (1) Technical problem to be solved

In order to overcome the above shortcomings of the prior art, the present disclosure provides a cat teaser. The present disclosure solves the technical problems that the existing laser teaser needs manual operation and has a small laser spot moving range.

### (2) Technical solution

To achieve the above objective, the present disclosure adopts the following technical solution:
In a first aspect, an embodiment of the present disclosure provides a cat teaser. The cat teaser includes a base and a power supply fixed on the base, where the cat teaser further includes a main body shell, a laser emitting module, a fixed frame, a main control circuit board and a main body motor;
the laser emitting module is provided on the top of the main body shell; the laser emitting module is provided with a laser emitter and an auxiliary motor configured to drive the laser emitting module to swing up and down; the laser emitting module is electrically connected to the main control circuit board;
the fixed frame, the main control circuit board and the main body motor are separately fixed inside the main body shell; a conductive disc is provided beneath the fixed frame;
the main body motor is fixed on the fixed frame; a shaft of the main body motor passes through the fixed frame and the conductive disc, and is fixed on the top of the base;
the power supply is provided with pogo pins; the pogo pins are installed on the top of the base and are in contact and conduction with the conductive disc;
the main control circuit board is configured to control the main body motor, the auxiliary motor and the laser emitter;
the main control circuit board is electrically connected to the conductive disc; the power supply supplies power to the main body motor, the auxiliary motor and the laser emitter through the conductive disc and the main control circuit board;
the main body motor is controlled by the main control circuit board to drive the main body shell to rotate around the shaft of the main body motor.

Optionally, the conductive disc may include a positive conductive ring, a negative conductive ring and two conductive solder joints; the two conductive solder joints may be electrically connected to the positive conductive ring and the negative conductive ring, respectively;
input and output terminals of the main control circuit board may be soldered to the two conductive solder joints, respectively;
the pogo pins may include a positive pogo pin and a negative pogo pin;
the positive conductive ring may be in contact with the positive pogo pin, and the negative conductive ring may be in contact with the negative pogo pin.

Optionally, the laser emitting module may be further provided with a shell; the shell may be provided with an emitting hole corresponding to the laser emitter; one end of the shell may be provided with a mounting shaft, and the other end of the shell may be provided with a shaft hole;
the laser emitter and the auxiliary motor may be fixed in the shell; a shaft of the auxiliary motor protrudes from the shaft hole; the auxiliary motor may drive the laser emitting module to swing up and down around the shaft of the auxiliary motor;
the top of the main body shell may be provided with a first mounting part rotatably matched with the mounting shaft and a second mounting part fixedly matched with the shaft of the auxiliary motor.

Optionally, the laser emitting module may be further provided with an infrared sensor and an infrared circuit board; the infrared sensor may be provided on the infrared circuit board;
the infrared circuit board may be electrically connected to the main control circuit board;
the laser emitter may be electrically connected to the infrared circuit board.

Optionally, a plurality of pin connectors may be provided on the main control circuit board; the main body motor, the auxiliary motor and the infrared circuit board may be separately provided with pin connectors and may be electrically connected to the main control circuit board separately through the pin connectors.

Optionally, the cat teaser may further include a laser infrared cover; the laser infrared cover may cover the laser emitting module and be fixed to the main body shell.

Optionally, the power supply may further include a power circuit board and a battery;
the battery and the pogo pins may be electrically connected to the power circuit board separately.

Optionally, the main control circuit board may be provided with a control switch and a switch button matched with the control switch; the main body shell may be provided with a switch button hole corresponding to the switch button; and/or
the power circuit board may be provided with a tilt power-off switch and a tilt power-off button matched with the tilt power-off switch; the bottom of the base may be provided with a tilt power-off switch hole corresponding to the tilt power-off switch button; and/or
the power circuit board may be further provided with an indicator light; the base may be provided with a light guide corresponding to the indicator light.

Optionally, the pogo pin may include a pogo pin head, a pogo pin shell and a spring;
the pogo pin shell may be fixed on the top of the base;
the spring may be provided in the pogo pin shell;
a rear part of the pogo pin head may be movably placed in the pogo pin shell and may be in contact with the spring, and a front part of the pogo pin head may be in contact and conduction with the conductive disc;
the rear part of the pogo pin head may be further provided with a wire that passes through the pogo pin shell and may be electrically connected to the power circuit board.

Optionally, the base may be further provided with a counterweight and an anti-skid pad.

### (3) Beneficial effects

The present disclosure has the following beneficial effects:
1. The conductive disc and the main body motor are provided in the main body shell, and the conductive disc is in contact with the pogo pin, such that the electrical connection between the power supply in the base and the electronic components in the main body can be realized without a wire. The shaft of the main body motor is fixed on the base, so the main body motor can drive the main body shell to rotate with the shaft of the main body motor as the rotating shaft at an unlimited angle. Meanwhile, the auxiliary motor is provided in the laser emitting module, which can drive the laser emitting module to swing up and down. Therefore, the laser emitter in the laser emitting module can be driven by the main body motor and the auxiliary motor to rotate 360° with the base as the center on any trajectory, and emit lasers within a certain radius, which greatly increases the moving range of the laser spot. Since there are no wires between the power supply in the base and the electronic components in the main body, there is no risk of wire tangling during rotation, and the cost is reduced.
2. The main body shell and the base are only fixed by the shaft of the main body motor, which is easy to disassemble.
3. The main control circuit board can control the main body motor, the auxiliary motor and the laser emitter so as to control the movement trajectory of the laser spot, thereby making the movement of the laser spot more flexible and difficult to capture.
4. An infrared sensor is provided to monitor the movement trajectory of the animal, so as to realize the automatic rotation or stop of the cat teaser.
5. A tilt power-off switch is provided, which can turn off the laser emitter in time when the base is tilted, so as to prevent the laser from entering human eyes or cat eyes.

### BRIEF DESCRIPTION OF THE DRAWINGS

FIG. 1 is a stereoscopic view of a cat teaser according to Embodiment 1 of the present disclosure.
FIG. 2 is a side view of the cat teaser shown in FIG. 1.
FIG. 3 is a cross-sectional view along A-A of the cat teaser shown in FIG. 2.
FIG. 4 is a front view of the cat teaser shown in FIG. 1.
FIG. 5 is a cross-sectional view along B-B of the cat teaser shown in FIG. 4.
FIG. 6 is an exploded view of a main body of the cat teaser shown in FIG. 1.
FIG. 7 is a schematic diagram of a conductive disc fixed under a fixed frame.
FIG. 8 is an exploded view of a base of the cat teaser shown in FIG. 1.
FIG. 9 is a schematic structural diagram of a bottom surface of a bottom shell shown in FIG. 8.
FIG. 10 is a stereoscopic view of a pogo pin.

Reference Numerals:
10. main body; 111. front shell; 112. rear shell; 113. left/right decorative piece; 114. front/rear decorative piece; 115. rubber pad; 12. fixed frame; 13. main body motor; 131. shaft of main body motor; 14. main control circuit board; 141. switch button; 142. control switch; 15. conductive disc; 151. negative conductive ring; 152. positive conductive ring; 153. printed circuit board (PCB); 154. conductive solder joint; 16. laser emitting module; 161. shell; 1611. mounting shaft; 162. auxiliary motor; 1621. shaft of auxiliary motor; 163. infrared sensor; 164. infrared circuit board; 165. laser emitter; 17. laser infrared cover; 171. window; 20. base; 21. bottom shell; 211. power circuit board; 212. light guide; 213. tilt power-off switch; 2131. tilt power-off button; 214. counterweight; 215. anti-skid rubber pad; 216. battery support post; 22. upper cover of bottom shell; 221. pogo pin mounting hole; 222. motor shaft mounting hole; 241. battery; 242. pogo pin; 2421. pogo pin head; 2422. pogo pin shell; and 2423. wire.

### DETAILED DESCRIPTION OF THE EMBODIMENTS

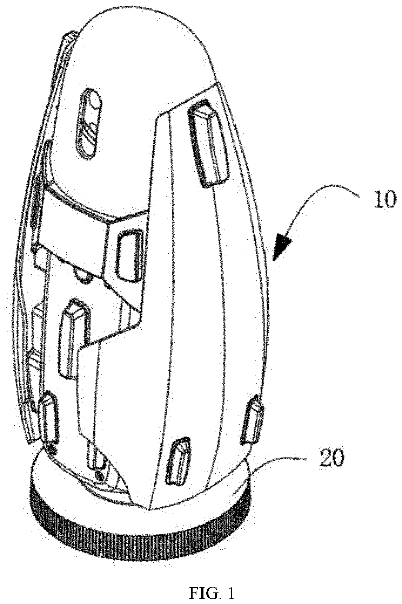

To facilitate a better understanding of the present disclosure, the present disclosure is described in detail below with reference to the accompanying drawings and specific embodiments. The terms such as "upper" and "lower" mentioned herein are based on the orientations shown in FIG. 1.

An embodiment of the present disclosure provides a cat teaser. The cat teaser includes a base and a power supply, a main body shell, a laser emitting module, a fixed frame, a main control circuit board and a main body motor fixed on the base. The laser emitting module is provided on the top of the main body shell. It is provided with a laser emitter and an auxiliary motor configured to drive the laser emitting module to swing up and down. The laser emitting module is electrically connected to the main control circuit board. The fixed frame and the main control circuit board are separately fixed inside the main body shell. A conductive disc is provided beneath the fixed frame. The main body motor is fixed on the fixed frame. A shaft of the main body motor passes through the fixed frame and the conductive disc, and is fixed on the top of the base. The power supply is provided with pogo pins. The pogo pins are installed on the top of the base and are in contact and conduction with the conductive disc. The main control circuit board is configured to control the main motor, the auxiliary motor and the laser emitting module. The main control circuit board is electrically connected to the conductive disc. The power supply supplies power to the main body motor, the auxiliary motor and the laser emitter through the conductive disc and the main control circuit board. The main body motor is controlled by the main control circuit board to drive the main body shell to rotate around the shaft of the main body motor.

In the cat teaser of the present disclosure, the power supply and the pogo pins are provided on the base, and the conductive disc and the main body motor are provided in the main body shell. The conductive disc is in contact with the pogo pin, such that the electrical connection between the power supply in the base and the electronic components in the main body can be realized without a wire. The shaft of the main body motor is fixed on the base, so the main body motor can drive the main body shell to rotate at an unlimited angle. Meanwhile, the auxiliary motor is provided in the laser emitting module, which can drive the laser emitting module to swing up and down. Therefore, the laser emitter in the laser emitting module can be driven by the main body motor and the auxiliary motor to rotate 360° with the base as the center, and emit lasers within a certain radius, which greatly increases the moving range of the laser spot and increases the attractiveness to the cat.

In order to facilitate a better understanding of the above technical solutions, the exemplary embodiments of the present disclosure are described in more detail below with reference to the accompanying drawings. Although the accompanying drawings show exemplary embodiments of the present disclosure, it should be understood that the present disclosure may be implemented in various forms and should not be limited to the embodiments set forth herein. The embodiments are provided for a more thorough understanding of the present disclosure, so as to make the scope of the present disclosure be fully conveyed to those skilled in the art.

### Specific Embodiments

### Embodiment 1

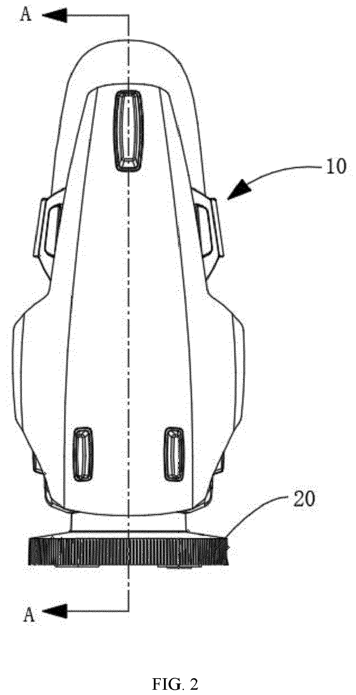

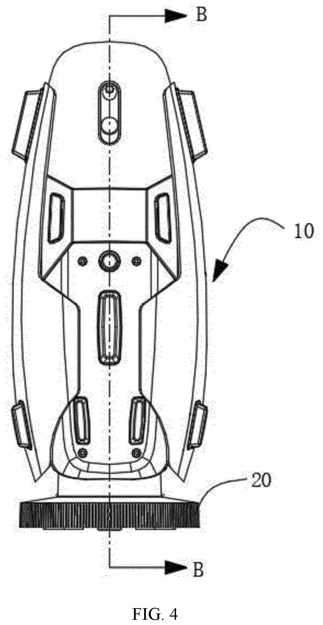

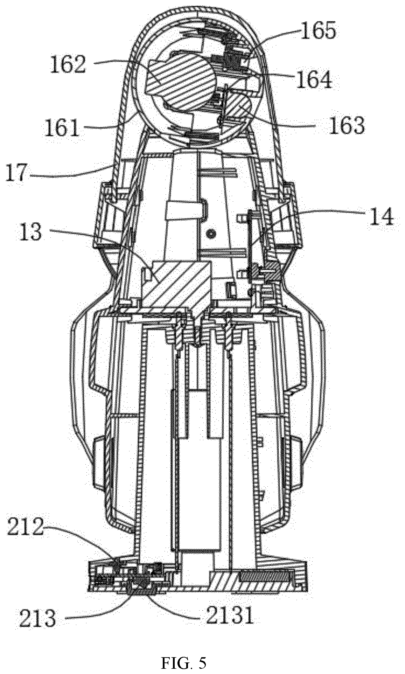

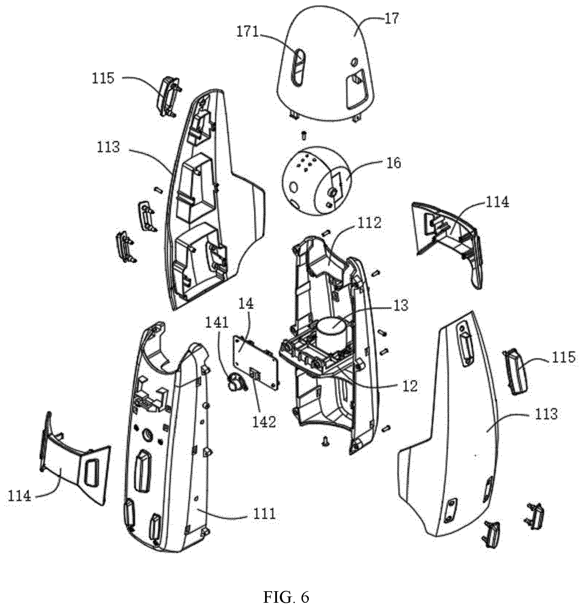

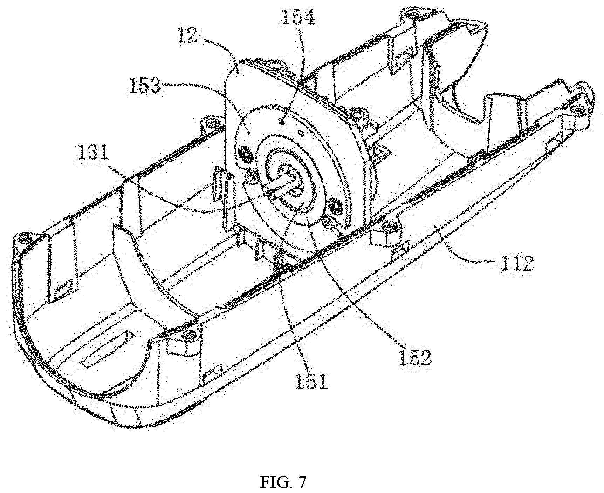

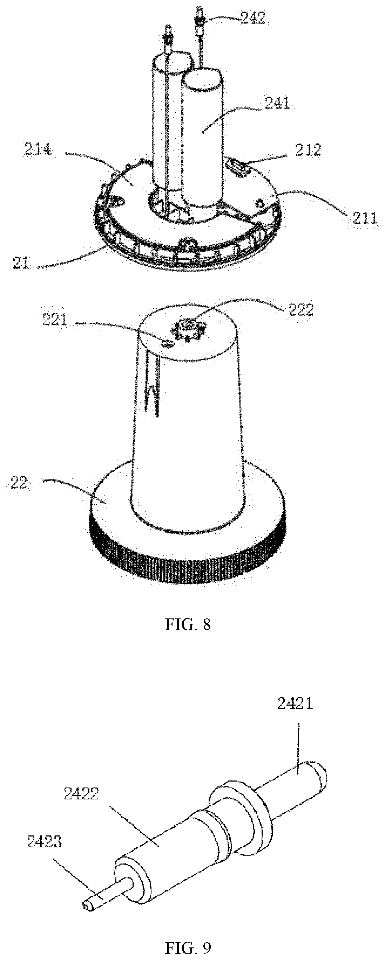

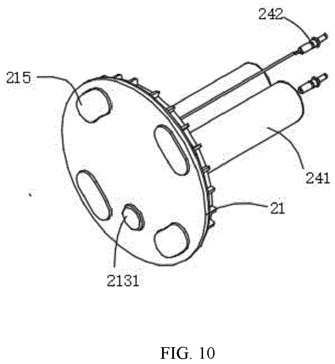

Referring to FIGS. 1 to 10, the cat teaser of this embodiment includes a main body 10 and a base 20.

The main body 10 includes a main body shell, a fixed frame 12, a main body motor 13, a main control circuit board 14, a conductive disc 15, a laser emitting module 16 and a laser infrared cover 17.

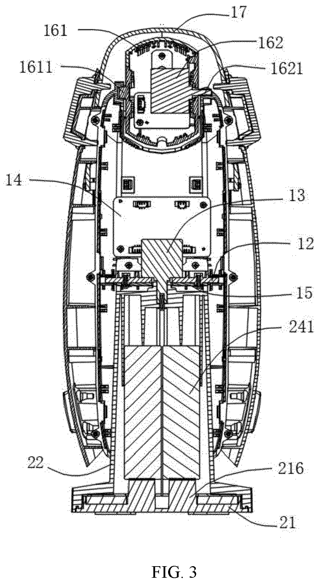

As shown in FIGS. 3 to 5 and FIG. 7, the fixed frame 12 is provided at a central position inside the main body shell. The main body motor 13 is fixed on the fixed frame 12, and the conductive disc 15 is fixed below the fixed frame 12.

The conductive disc 15 is provided with a through hole at a central position, and includes a negative conductive ring 151, a positive conductive ring 152 and a printed circuit board (PCB) 153. The negative conductive ring 151, the positive conductive ring 152 and the PCB 153 are respectively centered on the through hole. Two conductive solder joints 154 are provided on the PCB 153. One conductive solder joint is a voltage common collector (VCC) solder joint, which is connected to the positive conductive ring 152. The other conductive solder joint is a ground (GND) solder joint, which is connected to the negative conductive ring 151. The negative conductive ring 151 and the positive conductive ring 152 are respectively provided on the PCB 153, and they are not in conduction. The negative conductive ring 151 and the positive conductive ring 152 may be gilded with a conductive material. Nickel is plated before gilding, and copper is plated under the nickel.

A shaft 131 of the main body motor 13 passes through the fixed frame 12 and the through hole of the conductive disc 15.

The main control circuit board 14 is provided with a control switch 142, a switch button 141 matched with the control switch 142 and a laser spot trajectory control module (not shown). The laser spot trajectory control module is configured to control the main body motor 13 and an auxiliary motor 162 so as to control the trajectory of a laser spot emitted by a laser emitter in the laser emitting module 16. The switch button 141 is configured to manually turn on/off the cat teaser.

The laser emitting module 16 is provided with a shell 161, and the shell 161 may be provided with a heat dissipation hole. The laser emitter 165, the infrared sensor module and the auxiliary motor 162 are fixed in the shell 161. The infrared sensor module is provided with an infrared circuit board 164 and an infrared sensor 163. The infrared sensor 163 is provided on the infrared circuit board 164, and the laser emitter 165 is electrically connected to the infrared circuit board 164. The shell 161 is provided with a laser hole corresponding to the laser emitter 165 and an infrared hole corresponding to the infrared sensor 163. The shell 161 is provided with a mounting shaft 1611 at one end and a shaft hole at the other end. A shaft 1621 of the auxiliary motor 162 protrudes from the shaft hole.

In this embodiment, input and output terminals of the main control circuit board 14 are respectively soldered to the two conductive solder joints 154 of the conductive disc 15 and are in conduction. The main control circuit board 14 is provided with a plurality of pin connectors. The main body motor 13, the infrared circuit board 164 and the auxiliary motor 162 are separately provided with pin connectors and are electrically connected to the main control circuit board 14 separately through the pin connectors.

The laser infrared cover 17 is provided with a window 171 corresponding to an emitting hole of the laser emitter.

The main body shell includes a front shell 111 and a rear shell 112 that are matched with each other. The front shell 111 is provided with a button hole corresponding to the switch button 141 on the main control circuit board 14. Left and right sides and front and rear sides of the main body shell may also be provided with left and right decorative pieces 113 and front and rear decorative pieces 114 respectively, and a rubber pad 115 is provided on the decorative piece.

The top of the main body shell is provided with a first mounting part rotatably matched with the mounting shaft 1611 of the laser emitting module 16 and a second mounting part fixedly matched with the shaft 1621 of the auxiliary motor 162. The shaft 1621 may be fixedly matched with the second mounting part by a screw. When the auxiliary motor 162 is working, the auxiliary motor 162 drives the laser emitting module 16 to swing up and down with the shaft of the auxiliary motor as the rotating shaft.

In a practical application, the first mounting part and the second mounting part on the top of the main body shell may be provided on the front shell 111 or on the rear shell 112.

In a practical application, a limit post may be provided on an outer side of the shell 161 of the laser emitting module 16. A limit stop is correspondingly provided on the main body shell to limit the swing angle of the laser emitting module 16 within a proper range, such as 15°.

In a practical application, an angle switch may also be provided on the laser emitting module 16 to make the laser emitting module 16 return to an initial position after the cat teaser stops working or before it starts working.

In a practical application, the laser emitting module 16 may also be provided with an angle sensor to control the range of the vertical swing angle of the auxiliary motor 162, such as 15°. An initial angle may also be set such that each time the cat teaser is turned off, the laser emitting module 16 can be turned back to the initial position.

The laser infrared cover 17 covers the laser emitting module 16 and is fixed to the main body shell. In this embodiment, the laser infrared cover 17 can play a role of decorating and protecting the laser emitting module 16. It is fixed on the main body shell by a buckle, and in a practical application, it may also be fixed by a screw, etc.

In a practical application, the main body motor 13 and the auxiliary motor 162 may be decelerated stepper motors.

Referring to FIGS. 3, 4, 8 and 9, the base 20 includes a bottom shell 21 and an upper cover 22 of the bottom shell. The upper cover of the bottom shell is fixed on the bottom shell 21.

The power supply includes a power circuit board 211, a battery 241 and pogo pins 242.

The power circuit board 211 is fixed to the bottom of the upper cover 22 of the bottom shell. The power circuit board 211 is provided with an indicator light, a tilt power-off switch 213 and a tilt power-off button 2131 matched with the tilt power-off switch. The indicator light is configured to indicate the working status and charging status of the battery 241. The tilt power-off switch 213 is provided under the power circuit board 211. The tilt power-off button 2131 protrudes from the bottom shell 21. The tilt power-off button can be in contact with a plane on which the cat teaser is placed, and is configured to power off the battery 241 when the base 20 is tilted. It can turn off the laser emitter in time when the base is tilted, so as to prevent the laser from entering human eyes or cat eyes.

The battery 241 is placed in an accommodating cavity of the upper cover 22 of the bottom shell and is connected to the power circuit board 211.

The pogo pin 242 includes a pogo pin head 2421, a pogo pin shell 2422 and a spring (not shown). The pogo pin shell 2422 is fixed on a top end of the upper cover 22 of the bottom shell. The spring is provided in the pogo pin shell 2422. A rear part of the pogo pin head 2421 is movably placed in the pogo pin shell 2422 and is in contact with the spring. A wire 2423 at the rear part passes through the pogo pin shell 2422 and is electrically connected to the power circuit board 211. There are two pogo pins 242, namely a positive pogo pin and a negative pogo pin.

The top of the upper cover 22 of the bottom shell is provided with a pogo pin mounting hole 221 and a motor shaft mounting hole 222. The two pogo pins 242 are fixed in the pogo pin mounting holes 221, and the pogo pin heads 2421 are exposed from the pogo pin mounting hole 221. The negative and positive pogo pins may respectively contact and conduct with the negative conductive ring 151 and the positive conductive ring 152 of the conductive disc 15. The shaft 131 of the main body motor 13 is fixedly matched with the motor shaft mounting hole 222 so as to fix the shaft 131 of the main body motor 13 on the upper cover 22 of the bottom shell. The upper cover 22 of the bottom shell is further provided with a light guide 212 corresponding to the indicator light of the power circuit board 211.

In a practical application, the pogo pin 242 may be fixed on the upper cover 22 of the bottom shell by an expansion fixing member.

In this embodiment, the shaft 131 of the main body motor may be fixed in the motor shaft mounting hole 222 by a bolt. In a practical application, other methods may also be configured to fix the shaft 131 of the main body motor in the motor shaft mounting hole 222, as long as the shaft of the main body motor and the base are fixed.

A battery support post 216 for placing the battery 241 is provided in the center of the bottom shell 21. The battery support post 216 may be made of an elastic material, such as foam, to support and buffer the battery. A counterweight 214 is fixed on the bottom shell 21. The counterweight and the power circuit board 211 are respectively located on both sides of the battery support post 216. The bottom shell 21 is further provided with a tilt power-off switch hole corresponding to the tilt power-off switch button 2131.

In a practical application, the cat teaser may also be provided with a sound generating device. The sound generating device may be provided on the base 20 or the main body 10. When the cat teaser is working, the sound generating device can be controlled by the main control circuit board 14 or the power circuit board 211 to play music. When the cat teaser is tilted, the sound generating device can be controlled by the main control circuit board 14 or the power circuit board 211 to issue an alarm.

In this embodiment, the counterweight 214 and the power circuit board 211 are provided inside the base 20. In a practical application, the counterweight 214 may also be provided on a bottom surface of the bottom shell 21. In a practical application, an anti-skid rubber pad 215 may be provided on the bottom surface of the bottom shell 21. In a practical application, the main function of the counterweight 214 is to increase the weight of the base so as to stabilize the center of gravity. It may also be replaced by a suction cup, which needs to be provided on the bottom surface of the bottom shell 21.

In a practical application, the battery 241 may be a rechargeable battery, which needs to be provided with a charging interface on the power circuit board 211. The power circuit board 211 may monitor the power of the battery 241, and when the power is too low, it is configured to control the indicator light to flash.

In a practical application, the control switch, the tilt power-off switch and the indicator light may be provided according to actual needs.

In the cat teaser of this embodiment, when the infrared sensor detects that a cat approaches, it wakes up the main control circuit board. The main control circuit board controls the main body motor and the auxiliary motor to be energized. The main body motor is controlled by the main control circuit board to drive the main body shell to rotate 360° with the shaft of the main body motor as the rotating shaft in the horizontal direction. Meanwhile, the laser emitting module on the top of the main body is driven by the auxiliary motor to swing within about 15° in the vertical direction with the shaft of the auxiliary motor as the rotating shaft. In this way, the cat teaser can realize 360° rotation and can emit the laser within a radius of 1.2-2 m. After the cat leaves, when the infrared sensor does not detect the cat within a time beyond a preset one, it sends a control signal to the main control circuit board to make the main control circuit board enter a dormant state. Meanwhile, the power supply of the main body motor and the auxiliary motor is cut off to reduce power loss and extend standby time.

In a practical application, the swing angle of the laser emitting module may not be limited or may be limited to 0-180°, and the laser can be projected to any position around the cat teaser to form a laser spot.

The cat teaser of this embodiment is composed of two parts, namely a fixed base part and a rotatable main body part. The power supply and the pogo pins are provided on the base, and the conductive disc and the main body motor are provided in the main body shell. The conductive disc is in contact with the pogo pin, and the electrical connection between the power supply in the base and the electronic components of the main control circuit board in the main body can be realized without a wire. Therefore, there is no risk of wire tangling when the main body part rotates, and the production cost is reduced. The shaft of the main body motor is fixed on the base, and the main body motor can drive the main body shell to rotate 360° on any trajectory with the shaft of the main body motor as the rotating shaft. Meanwhile, the laser emitting module is provided with an auxiliary motor, which can drive the laser emitting module to swing up and down with the shaft of the auxiliary motor as the rotating shaft, which greatly increases the moving range of the laser spot. In addition, the main body shell and the base are only fixed by the shaft of the main body motor, which is convenient for disassembly.

### Embodiment 2

Embodiment 2 is improved on the basis of the cat teaser of Embodiment 1. In this embodiment, an animal sensor capable of sensing the approach of an animal is provided on the laser emitting module, such as a temperature sensor or a camera.

When the animal sensor detects that an animal is approaching, it sends a signal to the main control circuit board to make the main control circuit board control the cat teaser to start working. When the animal sensor detects that the animal leaves, it sends a signal to the main control circuit board to make the main control circuit board control the cat teaser to stop working.

When the animal sensor is a camera, the main control circuit board can analyze an image captured by the camera. When the camera captures an animal image (such as a cat), the cat teaser is controlled to start/stop working.

In a practical application, a preset laser spot trajectory or a preset trajectory algorithm may be pre-stored in the laser spot trajectory control module of the main control circuit board, or the laser spot trajectory may be set to random.

In a practical application, when the infrared sensor or camera is adopted, a tracking algorithm may also be pre-stored in the laser spot trajectory control module. The infrared sensor or camera is configured to track the moving trajectory of the animal, thereby controlling the movement of the laser spot away from the animal, such that the pet is not easy to catch the laser spot and not easy to lose the laser spot.

In addition, when the infrared sensor or camera detects that a pet is approaching, the main control circuit board is awakened, and the cat teaser starts to work. Meanwhile, the sound generating device is controlled by the main control circuit board 14 or the power circuit board 211 to play music, so as to actively attract the pet to catch the light spot.

In this embodiment, the cat teaser is provided with an animal sensor that can sense the approach of the animal and automatically control the working state of the cat teaser. Since the cat teaser has no risk of wire tangling when rotating, it can rotate infinitely at 360°. The main body motor, the auxiliary motor and the laser emitter are controlled based on various trajectories or algorithms in the laser spot trajectory control module of the main control circuit board. The laser spot trajectories are diversified, flexible, changeable and not easy to catch, which improves the attractiveness to the cat and makes the cat willing to play with the cat teaser.

### Embodiment 3

Embodiment 3 is improved on the basis of the cat teaser of the previous embodiment. In this embodiment, an angle sensor is provided on the base or the main body shell. The angle sensor is communicatively connected to the power circuit board, and is configured to detect a placement angle of the cat teaser. When the cat teaser is tilted, it sends a control signal to the power circuit board, such that the power circuit board cuts off the power in time to turn off the laser emitter. In this embodiment, the tilt power-off switch of the cat teaser in Embodiment 1 or 2 can be omitted.

### Embodiment 4

This embodiment is improved on the basis of the cat teaser of the previous embodiment. In this embodiment, the auxiliary motor is fixed on the main body shell. The shaft of the auxiliary motor is connected to a rotating mechanism and drives the rotating mechanism to swing up and down. The laser emitter, the infrared sensor, the camera and the angle sensor are fixed on the rotating mechanism.

It should be understood that in the description of the present disclosure, terms such as "first" and "second" are used merely for a descriptive purpose, and should not be construed as indicating or implying relative importance, or implicitly indicating the number of indicated technical features. Thus, features defined with "first" and "second" may explicitly or implicitly include one or more of the features. In the description of the present disclosure, "a plurality of" means two or more, unless otherwise specifically defined.

In the present disclosure, unless otherwise clearly specified, the terms such as "mounting", "interconnection", "connection" and "fixation" are intended to be understood in a broad sense. For example, the "connection" may be a fixed connection, removable connection or integral connection; may be a mechanical connection or electrical connection; may be a direct connection or indirect connection using a medium; and may be a communication or interaction between two elements. Those of ordinary skill in the art may understand specific meanings of the above terms in the present disclosure based on a specific situation.

In the present disclosure, unless otherwise explicitly specified, when it is described that a first feature is "above" or "below" a second feature, it indicates that the first and second features are in direct contact or the first and second features are in indirect contact through an intermediate feature. In addition, when it is described that the first feature is "over", "above" and "on" the second feature, it indicates that the first feature is directly or obliquely above the second feature, or simply indicates that an altitude of the first feature is higher than that of the second feature. When it is described that a first feature is "under", "below" or "beneath" a second feature, it indicates that the first feature is directly or obliquely under the second feature or simply indicates that the first feature is lower than the second feature.

In the description of this specification, the description with reference to the terms such as "one embodiment", "some embodiments", "example", "specific example" or "some examples" means that specific features, structures, materials or characteristics described in connection with the embodiment or example are included in at least one embodiment or example of the present disclosure. In this specification, the schematic representation of the above terms is not necessarily directed to the same embodiment or example. Furthermore, the specific features, structures, materials, or characteristics described may be combined in a suitable manner in any one or more of embodiments or examples. In addition, a person skilled in the art may combine different embodiments or examples described in this specification and characteristics of the different embodiments or examples without mutual contradiction.

Although the embodiments of the present disclosure are illustrated above, it should be understood that the above embodiments are merely illustrative and may not be construed as limiting the scope of the present disclosure. Changes, modifications, substitutions and variations may be made to the above embodiments by a person of ordinary skill in the art within the scope of the present disclosure.

## Claims

1. A cat teaser, comprising
a base (20), a power supply fixed on the base, a main body shell, a laser emitting module (16), a fixed frame (12), a main control circuit board (14) and a main body motor (13);
the laser emitting module is provided on a top of the main body shell;
the laser emitting module is provided with a laser emitter (165) and an auxiliary motor (162), wherein the auxiliary motor is configured to drive the laser emitting module to swing up and down;
the laser emitting module is electrically connected to the main control circuit board;
the fixed frame, the main control circuit board and the main body motor are separately fixed inside the main body shell;
a conductive disc (15) is provided beneath the fixed frame;
the main body motor is fixed on the fixed frame;
a shaft (131) of the main body motor passes through the fixed frame and the conductive disc, and the shaft of the main body motor is fixed on a top of the base;
the power supply is provided with pogo pins (242);
the pogo pins are installed on the top of the base, and the pogo pins are in contact and conduction with the conductive disc;
the main control circuit board is configured to control the main body motor, the auxiliary motor and the laser emitting module;
the main control circuit board is electrically connected to the conductive disc;
the power supply supplies power to the main body motor, the auxiliary motor and the laser emitter through the conductive disc and the main control circuit board; and
the main body motor is controlled by the main control circuit board to drive the main body shell to rotate around the shaft of the main body motor.

2. The cat teaser according to claim 1, wherein,
the conductive disc comprises a positive conductive ring (152), a negative conductive ring (151) and two conductive solder joints (154);
the two conductive solder joints are electrically connected to the positive conductive ring and the negative conductive ring, respectively;
an input terminal and an output terminal of the main control circuit board are soldered to the two conductive solder joints, respectively;
the pogo pins comprise a positive pogo pin and a negative pogo pin; and
the positive conductive ring is in contact with the positive pogo pin, and the negative conductive ring is in contact with the negative pogo pin.

3. The cat teaser according to claim 1 or 2, wherein
the laser emitting module is further provided with a shell (161);
a first end of the shell is provided with a mounting shaft (1611), and a second end of the shell is provided with a shaft hole;
the laser emitter and the auxiliary motor are fixed in the shell;
a shaft (1621) of the auxiliary motor protrudes from the shaft hole;
the auxiliary motor drives the laser emitting module to swing up and down around the shaft of the auxiliary motor; and
the top of the main body shell is provided with a first mounting part rotatably matched with the mounting shaft and a second mounting part fixedly matched with the shaft of the auxiliary motor.

4. The cat teaser according to claim 1, wherein
the laser emitting module is further provided with an infrared sensor (163) and an infrared circuit board (164);
the infrared sensor is provided on the infrared circuit board;
the infrared circuit board is electrically connected to the main control circuit board; and the laser emitter is electrically connected to the infrared circuit board.

5. The cat teaser according to claim 4, wherein
the main body motor, the auxiliary motor and the infrared circuit board are electrically connected to the main control circuit board separately through pin connectors.

6. The cat teaser according to claim 5, further comprising
a laser infrared cover (17); wherein
the laser infrared cover covers the laser emitting module, and
the laser infrared cover is fixed to the main body shell.

7. The cat teaser according to claim 6, wherein
the power supply further comprises a power circuit board (211) and a battery (241); and
the battery and the pogo pins are electrically connected to the power circuit board separately.

8. The cat teaser according to claim 7, wherein
the main control circuit board is provided with a control switch (142) and a switch button (141) matched with the control switch; the main body shell is provided with a switch button hole corresponding to the switch button; and/or
the power circuit board is provided with a tilt power-off switch (213) and a tilt power-off button (2131) matched with the tilt power-off switch; a bottom of the base is provided with a tilt power-off switch hole corresponding to the tilt power-off button; and/or
the power circuit board is further provided with an indicator light; the base is provided with a light guide (212) corresponding to the indicator light.

9. The cat teaser according to claim 8, wherein
each of the pogo pins comprises a pogo pin head (2421), a pogo pin shell (2422) and a spring; the pogo pin shell is fixed on the top of the base;
the spring is provided in the pogo pin shell;
a rear part of the pogo pin head is movably placed in the pogo pin shell and the rear part of the pogo pin head is in contact with the spring, and a front part of the pogo pin head is in contact and conduction with the conductive disc;
a wire (2423) at the rear part of the pogo pin head passes through the pogo pin shell, and the wire is electrically connected to the power circuit board.

10. The cat teaser according to claim 1, wherein
the base is further provided with a counterweight (214) and an anti-skid pad (215).
